# EUROPEAN PATENT APPLICATION

(11) **EP 2 908 516 A1**
(43) Date of publication of application: **19.08.2015**
(21) Application number: 14155282.8
(22) Date of filing: 14.02.2014
(51) Int. Cl.: H04N 7/15, H04N 21/231, H04N 21/2343, H04N 21/438

(54) **Process for transmitting an ongoing video stream from a publisher to a receiver through a MCU unit during a live session**

(71) Applicant: ALCATEL LUCENT, 92100 Boulogne-Billancourt (FR)
(72) Inventor: Delegue, Gérard, 91620 Nozay (FR); Verdot, Vincent, 91620 Nozay (FR); Bouche, Nicolas, 91620 Nozay (FR)
(74) Representative: Sayettat, Julien Christian

(57) **Abstract**

Process for transmitting an ongoing video stream from a publisher (1) to a receiver (2) through a Multipoint Control Unit (MCU) (3) during a live session to which said receiver is connected through a network, said video stream being encoded in key frames and other types of frames, wherein a key frame is useful for decoding other types of frames, said process providing for collecting and decoding the encoded frames of said video stream at the side of the Multipoint Control Unit (3), and for writing and storing raw decoded frames of said video stream into a database (7) within said Multipoint Control Unit, said process further providing, as a receiver (2) connects to the session, for analysing the type of the latest decoded frame at the time of said connection, so as to send to said receiver said latest frame as sent by said publisher when said latest frame is a key frame and to send to said receiver the raw frame of said latest frame when said latest frame is not a key frame.

## Description

The invention relates to a process for transmitting an ongoing video stream from a publisher to a receiver through a Multipoint Control Unit (MCU) during a live session to which said receiver is connected through a network, such as a MCU unit comprising means for implementing such a process.

In a known manner, video streams may be represented as a series of still images frames, the sequence of which contains spatial and temporal redundancies that video compression algorithms attempt to eliminate, so as to code said video streams in a smaller size in order to save bandwidth and storage space, which is particularly important for the transmission of said video streams through network and/or the storing of such video streams into storage devices, such as databases implemented into a network, a terminal, or a mobile storage device such as a disk.

In particular, such video compression algorithms may encode a video stream by only storing differences between the frames of said video stream or by using perceptual features of human vision.

One of the most popular techniques for video compression is the inter-frame compression technique, which is used in video coding standards such as the H264 standard or the VP8 standard, and uses one or more earlier or later frames in a sequence of a video stream to compress the current frame. In comparison, the also known intra-frame compression technique uses only the current frame in full picture, but is longer to accomplish than the inter-frame technique.

In particular, the basic inter-frame compression technique works by comparing each frame of the video stream with the previous one. If the current frame contains areas of sections which have "moved" relative to their positions in the previous frame, the compressor emits a command, containing for example a motion vector, so as to tell a decompressor that further receives encoded frames of said video stream how to copy that moving sections of a previously decoded frame into the next frame to be decoded.

However, because the inter-frame compression technique relies on copies of data from one frame to another, if an original frame is simply cut out or lost during the transmission of the compressed video stream, the following frames cannot be reconstructed properly. Thus, the receiver of the video stream will have to wait for a new intra-frame in full picture from the transmitter to resume the decompression and the playback of said video stream.

More particularly, the missing of an intra-frame is the typical problem encountered by a video player consuming an ongoing video stream. Indeed, if the publisher of a video stream started the sending of frames of said video streams before a receiver has started to consume said video stream, for example after having connected himself to a live session and requested said video stream, the initial frames of said video streams are lost and the decompressor of the video player of said receiver is likely to receive first inter-frames which cannot be decoded until the receipt of the next intra-frame in full picture. Thus, the receiver may encounter a delay during which the video player displays a blank screen, as no frame can be rendered.

The duration of this delay depends on the intra-frame rate of the compressor that has encoded the video stream, said rate being often expressed as Group of Picture (GOP) size, and corresponding to the number of coded frames interposed between two consecutive intra-frames. The delay also depends on the playback position within the current Group of Pictures. Thus, this blackout delay can reach dozens of seconds of unavailability depending on the implementation choices, with is no acceptable in real time communication of video streams.

A typical example of real time communication of video streams with playback is video conferencing, wherein several participants provide each a video stream, notably a video capture of themselves, to be consumed by other participants, said participants being also connected to a video conferencing live session through a Multipoint Control Unit (MCU). The MCU unit distributes the received video frames to the participants as soon as they connect to the session, so that the newly connected participants are likely to receive inter-frames without the corresponding previous intra-frames, and so to postpone the decompression process until the end of the current Group of Picture by the receipt of the next intra-frame, which may be fairly time consuming.

To overcome these drawbacks, the most immediate solution to speed up the video playback of an ongoing video stream is to dynamically request the publisher of said video stream to emit a new intra-frame.

To do so, the RFC 5104 document (Request For Comments) published by the IETF group (Internet Engineering Task Force) and entitled "Codec Control Messages in the RTP (Real-time Transport Protocol) Audio-Visual Profile with Feedback (AVPF)" describes mechanisms for handling issues related to the received unable to render video frames, and more especially the Full Intra Request (FIR) mechanism.

The use of such an FIR mechanism is particularly appropriate in multipoint video conferencing to provide a newly joined client with a fresh intra-frame, so that he can start right away rendering the video frames. As depicted in the document, the MCU unit sends to the publisher of a video stream, upon the connection of a receiver to the session or the switching of said receiver to said video stream during said session, a FIR request. Upon the receipt of the FIR request, the encoder of the publisher generates a new intra-frame as soon as possible, which is eventually transmitted to said receiver.

However, this solution does not give entire satisfaction and suffers from several drawbacks. Indeed:
- the access network can be overloaded by intra-frame packets if several receivers join the session at the same time. In that case, the packet loss rate between the publisher and the MCU unit can significantly grow. Moreover, any time a FIR request is used, the throughput of all video streams (one video stream per receiver) is increased, so that intra-frame compression becomes far less efficient than inter-frame compression;
- the delay between the connection to the session and the actual reception of the intra-frame by the receiver may be significant as negotiation messages have to be propagated from the receiver through the MCU unit to the publisher, and also on all the way back;
- it requires dynamically controlling the coding mechanism, so that it cannot be used in some environments such as those relying on streaming recorded, and so pre-coded, contents. Moreover, the publisher must support the format of the FIR messages, which is not always the case;
- it negatively impacts on the publisher, notably in terms of Central Processing Unit (CPU) and memory congestion and of network bandwidth consumption, as it requires resetting the whole coding mechanisms anytime a receiver requests it.

In view of the lack of efficiency of the previous solution, other ones were proposed, so as the solution described in the document US-2008/0231687 ("Minimizing Fast Video Update Requests in a Video Conferencing System", Cisco Technology).

This document describes a method based on discarding the initial series of Fast Video Updates (FVU) messages that are sent for requesting an intra-frame with full picture (as described for example in the RFC 5168 document), said messages being received by a video conferencing system from multiple endpoints that are connected simultaneously to the session within a short period of time.

In particular, as explained in further details in this document, one or more consecutive FVU messages that are received in bursts by a MCU unit are discarded. After an arbitrary number of messages or a timeout duration, a single FVU message is then sent to the publisher, said message being notably obtained by factorizing the requests of the endpoints to lighten the charge on said publisher. Upon receipt of the FVU message at the publisher, an intra-frame is generated by said publisher, before being sent back to the MCY unit and finally propagated to the requesting endpoints.

However, this solution also have drawbacks, and the main drawback is that, by delaying the FVU messages, said solution infers an additional delay on the endpoints before they are able to decode the video frames. Moreover, even if this solution allows to slightly reduce the negative impacts of the FVU mechanism on the publisher and the network infrastructure, all the other problems related to the use of a FIR-like mechanism still occur.

The invention aims to improve the prior art by proposing a solution which guarantees the instant playback of an ongoing video stream at the side of a receiver while avoiding any impact on the publisher of said video stream, notably in terms of using Control Process Unit and/or coding algorithm.

For that purpose, and according to a first aspect, the invention relates to a process for transmitting an ongoing video stream from a publisher to a receiver through a Multipoint Control Unit (MCU) during a live session to which said receiver is connected through a network, said video stream being encoded in key frames and other types of frames, wherein a key frame is useful for decoding other types of frames, said process providing for collecting and decoding the encoded frames of said video stream at the side of the Multipoint Control Unit, and for writing and storing raw decoded frames of said video stream into a database within said Multipoint Control Unit, said process further providing, as a receiver connects to the session, for analysing the type of the latest decoded frame at the time of said connection, so as to send to said receiver said latest frame as sent by said publisher when said latest frame is a key frame and to send to said receiver the raw frame of said latest frame when said latest frame is not a key frame.

According to a second aspect, the invention relates to a computer program for implementing such a process.

According to a third aspect, the invention relates to a computer readable storage medium comprising instructions to cause a data processing apparatus to carry out such a process.

According to a fourth aspect, the invention relates to a Multipoint Control Unit for transmitting an ongoing video stream from a publisher to a receiver during a live session to which said receiver is connected through a network, said video stream being encoded in key frames and other types of frames, wherein a key frame is useful for decoding other types of frames, said MCU unit comprising:
- an orchestrator module comprising means for collecting the encoded frames of said video stream from said publisher;
- at least one decoder module for decoding said frames, said decoder module being adapted to write and store raw decoded frames into a database within said MCU unit;
- a sender module for sending frames to the receiver;
said MCU unit further comprising:
- a session module comprising means for allowing a receiver to connect to the session, such as means for emitting a notification upon such a connection;
- a generation module comprising means for receiving said notification from said session module and means for sending to the decoder module a request for the analysis of the type of the latest frame received by said decoder module at the time of said connection, said generation module further being adapted to manage the sending of said latest frame as sent by the publisher to the receiver when said frame is a key frame and to manage the sending of the raw frame of said latest frame to said receiver when said latest frame is not a key frame.

Other aspects and advantages of the invention will become apparent in the following description made with reference to the appended figures, wherein:
- figure 1 represents schematically an architecture for implementing a process according to the invention;
- figure 2 represents schematically the steps of a process according to the invention.

In relation to those figures, a process for transmitting an ongoing video stream from a publisher 1 to a receiver 2 through a Multipoint Control Unit (MCU) 3 during a live session to which said receiver is connected through a network, such as a MCU unit 3 comprising means for implementing such a process, would be described below.

In particular, the process can be performed by an adapted computer program, or by a computer readable storage medium comprising instructions to cause a data processing apparatus to carry out said process.

The live session can be a video conferencing session, wherein several users are connected through their terminals and exchange ongoing video streams that are video captures of themselves to each other. In particular, a user transmits his video stream through his terminal 1, which thus takes to role of a publisher, to at least another user through the MCU unit 3, said another user receiving said video stream on his terminal 2, which thus takes the role of a receiver.

The video stream can be transmitted by the publisher 1 according to a known protocol specially dedicated to ongoing video stream transmission, such as the Real time Transport Protocol (RTP), and is thus encoded into a compression format required by such a protocol. To do so, the publisher 1 comprises means for encoding the video stream to be transmitted in such a way.

In particular, the video stream to be transmitted is encoded in key frames and other types of frames, wherein a key frame is useful for decoding other types of frames.

For example, the video stream can be encoded in Groups of Pictures that are each constructed with a first intra-frame and consecutive inter-frames, wherein the intra-frame is obtained from a full picture and the consecutive inter-frames are obtained from said previous intra-frame and identified spatial and temporal differences with said intra-frame, said differences corresponding to movements of objects from a frame to the consecutive ones in the video stream and being technically encoded through motion vectors. Thus, an intra-frame is a key frame useful for decoding the consecutive inter-frames of the same Group of Pictures.

Once a publisher 1 starts to send packets 4 of its encoded video stream, the process provides for collecting and decoding the encoded frames of said video stream at the side of the MCU unit 3. To do so, the MCU unit 3 comprises an orchestrator module 5 comprising means for collecting the encoded frames of the video stream from the publisher 1, such as at least one decoder module 6 for decoding said frames.

In particular, for avoiding congestion of the MCU unit 3 at the decoding step, said MCU unit can comprise several decoder modules 6 and the orchestrator module 5 can be adapted to associate each video stream exchanged through said MCU unit to a dedicated decoder module 6, so that said orchestrator module will dispatch each received frame to its corresponding decoder module 6.

The process also provides for writing and storing raw decoded frames of the video stream into a database 7 within the MCU unit 3. To do so, the MCU unit 3 comprises such a database 7, the decoder module 6 being adapted to write and store the raw frames it has just decoded into said database.

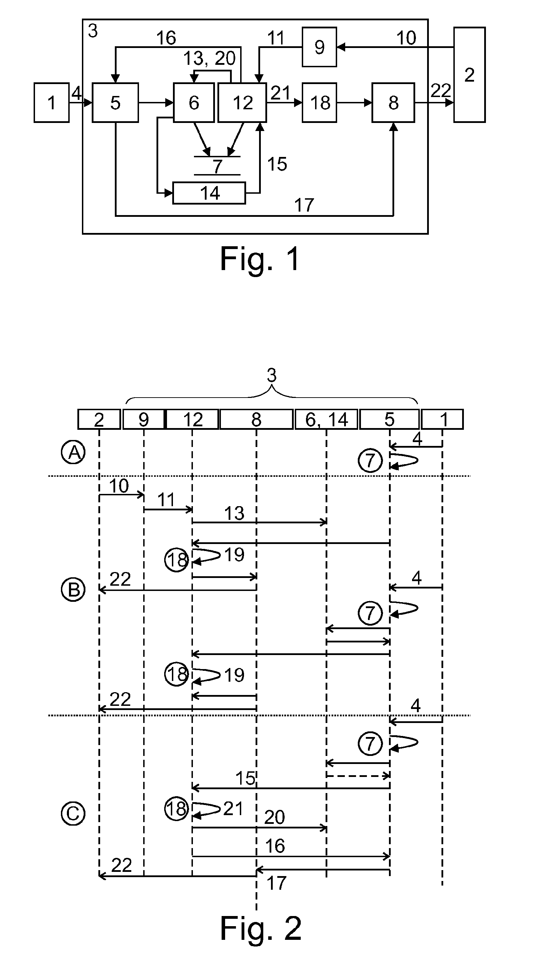

In relation to figure 2, the process implements an initial step A wherein frames are sent by the publisher 1 through packets 4 and are collected by the orchestration module 5, and thus decoded into raw frames that are further stored in the database 7.

Moreover, in a known manner, the MCU unit 3 comprises a sender module 8 for sending frames to a receiver 2 connected to the current live session, so that said receiver can display the video stream, notably by means of a video displayer implemented into said receiver.

The MCU unit 3 also comprises a session module 9 for allowing a receiver 2 to connect to the session, notably through the sending of a connection request 10 by said receiver, so that said receiver may also receive the video stream of the publisher 1, said session module also comprising means for emitting a notification 11 upon such a connection for triggering the sending of frames of said video stream to said receiver.

In particular, the session module 9 is adapted for checking the validity of the connection request 10 of the receiver 2, notably in relation to the existence of the requested live session and/or the authorization for said receiver to join it, and for emitting the notification 11 upon validation of said connection.

As a receiver 2 connects to a live session, it may receive from the MCU unit 3 the frames of the video stream as currently received by said MCU unit. In particular, if the latest frame received by the MCU unit 3 is a key frame, as for example an intra-frame introducing a Group of Pictures and useful for decoding other frames of said Group of Pictures, the receiver 2 may be able to quickly decode it and thus to quickly display the video stream.

On the contrary, if the latest frame is not a key frame, as for example an inter-frame of a Group of Pictures, the receiver 2 may wait for the sending of the next key frame, for example the intra-frame of the next Group of Pictures, before being able to display the video stream, which can lead to inacceptable delays with negative impacts on the Quality of Experience for the receiver 2.

To avoid such drawbacks, the process further provides for, as a receiver 2 connects to the current live session, for analysing the type of the latest decoded frame at the time of said connection, so as to send to said receiver said latest frame as sent by the publisher 1 when said latest frame is a key frame, and to send to said receiver the raw frame of said latest frame when said latest frame is not a key frame.

To do so, the MCU unit 3 comprises a generation module 12 comprising means for receiving the notification 11 of the session module 9 upon a connection of a receiver 2, such as means for sending to the decoder module 6 a request 13 for the analysis of the type of the latest frame received by said decoder module at the time of said connection.

In relation to figures, the MCU unit 3 comprises a detector module 14 with which the decoder module 6 interacts upon the receipt by said decoder module of a request 13 of frame analysis from the generation module 12, said detector module comprising means for analysing the latest frame received by the decoder module 6 and means for sending to the generation module 12 a notification 15 comprising the type of said analysed frame.

Depending on the type of the latest frame, the generation module 12 is adapted to manage the sending to the receiver 2 of said latest frame as sent by the publisher 1 when said latest frame is a key frame and the sending to the receiver 2 of the raw frame of said latest frame when said latest frame is not a key frame.

In particular, in relation to figures, the generation module 12 comprises means for sending, when the latest frame is a key frame, a request 16 to the orchestrator module 5, said orchestrator module comprising means for sending to the sender module 8 the encoded latest frame sent by the publisher 1, notably through a notification 17, so that the sender module 8 sends to the receiver 2 packets 22 comprising said encoded latest frame.

Moreover, when the latest frame is not a key frame, the process provides for retrieving the raw frame of said latest frame from the database 7 and for encoding at the side of the MCU unit 3 said raw frame to be sent to the receiver 2.

In relation to figure 2, the process implements a consecutive step B wherein a receiver sends a connection request 10 to join the current live session, whereas the latest packet 4 sent by the publisher 1 contains no key frame.

To do so, the MCU unit 3 comprises an encoder module 18, the generation module 12 comprises means for retrieving the raw frame from the database 7, such as means for sending said raw frame to said encoder module, in particular through a dedicated notification 19, so that said encoder module encodes and transmits said raw frame to the sender module 8, which transmits said raw frames through packets 22 to the receiver 2.

Thus, the invention relies on a continuous decoding of incoming video frames within the MCU unit 3 while forwarding them in parallel to potential receivers 2. Indeed, the storing of raw frames of each incoming frame within the MCU unit 3 allows to have a full picture for each of said incoming frames available at any time, and thus to allow said MCU unit to start a coding process for each receiver 2 that joins the live session, so as to encode and transmit such a full picture to said receiver, which can thus instantly start decoding and displaying the video stream whatever the type of the latest frame.

Moreover, as a new receiver 2 joins the session, the publisher 1 does not have to encode a key frame for it, as the MCU unit 3 is adapted to encode a full picture version of the latest received frame and to send it to said receiver, and thus with often a lower rate than the original received encoded frame. Thus, the bandwidth used by the publisher 1 and the MCU unit 3 is decreased.

In particular, in relation to figure 2, the generation module 12 is adapted to manage the transition period during which a receiver 2 has joined the current session and the publisher 1 has not sent yet any key frame of the video stream, said transition period being notably represented by step B of figure 2 and ending as soon as the publisher 1 finally sends a key frame to the MCU unit 3. Thus, the process provides for analysing all frames sent by the publisher 1 as said frames are not key frames, and further provides for stopping the frame analysis as soon as an analysed frame is a key frame.

To do so, the decoder module 6 is adapted to manage the analysis of all frames received by the orchestrator module 5 as said frames are not key frames. In relation to figure 2, the process implements a step C consecutive to the transition step B wherein the generation module 12 manages the transmission of raw frames, the step C starting as the detector module 14 detects a key frame upon analysis of the type of the latest frame and alerts the generation module 12 through notification 15.

Moreover, the generation module 12 further comprises means for sending to the decoder module 6 a request 20 for stopping the frame-type analysis as soon as an analysed frame is a key frame.

In the same time, the generation module 12 comprises means for managing the stopping of the encoder module 18 as soon as an analysed frame is a key frame, as for example by sending a dedicated notification 21, and the module 12 also sends to the orchestrator module 5 a request 16 for directly sending to the sender module 8 the encoded key frame as sent by the publisher 1, so that said sender module sends to the receiver 2 packets 22 comprising said encoded key frame.

Afterwards, the orchestrator module 5 further sends consecutive frames to this receiver 2 directly through the sender module 8 without any intervention of said generation module 12.

In particular, upon the receipt of a key frame, the MCU unit 3 is adapted to transparently switch to its common and well known function for forwarding the video stream originated by the publisher 1 to the intended receiver 2.

To do so, the sender module 8 is adapted to transmit every encoded frame to the receiver 2, and thus whatever the module 5, 18 from which said sender module receives said frame, while enabling to mask these different modules 5, 18 to the receiver 2. In particular, if the encoder module 18 of the MCU unit 3 encodes frames with specific configuration parameters, as for example a specific coding standard, the sender module 8 is adapted to send said configuration parameters to the receiver 2 before sending frames.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for transmitting an ongoing video stream from a publisher (1) to a receiver (2) through a Multipoint Control Unit (MCU) (3) during a live session to which said receiver is connected through a network, said video stream being encoded in key frames and other types of frames, wherein a key frame is useful for decoding other types of frames, said process providing for collecting and decoding the encoded frames of said video stream at the side of the Multipoint Control Unit (3), and for writing and storing raw decoded frames of said video stream into a database (7) within said Multipoint Control Unit, said process further providing, as a receiver (2) connects to the session, for analysing the type of the latest decoded frame at the time of said connection, so as to send to said receiver said latest frame as sent by said publisher when said latest frame is a key frame and to send to said receiver the raw frame of said latest frame when said latest frame is not a key frame.

2. Process according to claim 1, **characterized in that** it provides, when the latest frame is not a key frame, for retrieving the raw frame of said latest frame from the database (7) and for encoding at the side of the Multipoint Control Unit (3) said raw frame to be sent to the receiver (2).

3. Process according to claim 1 or 2, **characterized in that** it provides for analysing all frames sent by the publisher (1) as said frames are not key frames, said process further providing for stopping the frame analysis as soon as an analysed frame is a key frame.

4. Computer program for implementing a process according to any of claims 1 to 3.

5. Computer readable storage medium comprising instructions to cause a data processing apparatus to carry out a process according to any of claims 1 to 3.

6. Multipoint Control Unit (3) for transmitting an ongoing video stream from a publisher (1) to a receiver (2) during a live session to which said receiver is connected through a network, said video stream being encoded in key frames and other types of frames, wherein a key frame is useful for decoding other types of frames, said MCU unit comprising:
- an orchestrator module (5) comprising means for collecting the encoded frames of said video stream from said publisher;
- at least one decoder module (6) for decoding said frames, said decoder module being adapted to write and store raw decoded frames into a database (7) within said MCU unit;
- a sender module (8) for sending frames to the receiver;
said Multipoint Control Unit further comprising:
- a session module (9) comprising means for allowing a receiver (2) to connect to the session, such as means for emitting a notification (11) upon such a connection;
- a generation module (12) comprising means for receiving said notification from said session module and means for sending to the decoder module (6) a request (13) for the analysis of the type of the latest frame received by said decoder module at the time of said connection, said generation module further being adapted to manage the sending of said latest frame as sent by the publisher (1) to the receiver (2) when said frame is a key frame and to manage the sending of the raw frame of said latest frame to said receiver when said latest frame is not a key frame.

7. Multipoint Control Unit (3) according to claim 6, **characterized in that** it further comprises a detector module (14) with which the decoder module (6) interacts upon the receipt by said decoder module of a request (13) of frame analysis from the generation module (12), said detector module comprising means for analysing the latest frame received by the decoder module (6) and means for sending to the generation module (12) a notification (15) comprising the type of said analysed frame.

8. Multipoint Control Unit (3) according to claim 6 or 7, **characterized in that** it further comprises an encoder module (18), the generation module (12) comprising means for retrieving, when the latest frame is not a key frame, the raw frame of said latest frame from the database (7), such as means for sending said raw frame to said encoder module, so that said encoder module encodes and transmits said raw frame to the sender module (8).

9. Multipoint Control Unit (3) according to claim 8, **characterized in that** the generation module (12) comprises means for managing the stopping of the encoder module (18) as soon as an analysed frame is a key frame.

10. Multipoint Control Unit (3) according to any of claims 6 to 9, **characterized in that** the generation module (12) comprises means for sending, when the latest frame is a key frame, a request to the orchestrator module (5), said orchestrator module comprising means for sending the encoded latest frame sent by the publisher (1) to the sender module (8).

11. Multipoint Control Unit (3) according to any of claims 6 to 10, **characterized in that** the decoder module (6) is adapted to manage the analysis of all frames received by the orchestrator module (5) as said frames are not key frames, the generation module (12) further comprising means for sending to the decoder module (6) a request (20) for stopping said analysis as soon as an analysed frame is a key frame.
